# FASCICULE DE BREVET EUROPEEN

(11) **EP 0 984 548 B1**
(45) Date de publication et mention de la délivrance du brevet: **01.08.2007**
(21) Numéro de dépôt: 99402164.0
(22) Date de dépôt: 01.09.1999
(51) Int. Cl.: H02K 21/22, H02K 7/08, B60K 6/04, B60L 11/12

(54) **Moteur électrique destiné à être accouplé à une transmission, notamment d'un véhicule automobile**
Elektromotor zum Anflanschen an ein Getriebe, insbesondere an ein Kraftfahrzeuggetriebe
Electric motor for engagement with a transmission, especially with a motor vehicle transmission

(30) Priorité: 02.09.1998 FR 9810969
(43) Date de publication de la demande: 08.03.2000
(73) Titulaire: AUTOMOBILES PEUGEOT, 75116 Paris (FR); AUTOMOBILES CITROEN, 92200 Neuilly-sur-Seine (FR)
(72) Inventeur: Froumajou, Armand, 95110 Sannois (FR)
(74) Mandataire: Gendraud, Pierre

(56) Documents cités:
- EP-A- 0 780 507
- WO-A-84/01863
- DE-A- 19 618 865
- DE-A- 19 629 346
- DE-C- 4 404 791
- US-A- 5 654 598
- PATENT ABSTRACTS OF JAPAN vol. 15, no. 90 (E-1040), 5 mars 1991 (1991-03-05) & JP 02 303350 A (MATSUSHITA ELECTRIC IND CO), 17 décembre 1990 (1990-12-17)

## Description

La présente invention se rapporte à un moteur électrique destiné à être accouplé à une transmission, notamment d'un véhicule automobile.

Elle se rapporte plus particulièrement aux moteurs à aimants permanents, dans lesquels le rotor qui porte les aimants à une forme de cloche et est disposé coaxialement autour du stator.

Les documents DE 196 29 346 A et DE 196 18 865 décrivent de tels moteurs.

Ce type de moteur nécessite une valeur de l'entrefer qui soit le plus faible possible afin de minimiser les pertes de rendement. Or, les aimants permanents de ce type de moteur exercent une forte attraction sur les parties ferreuses environnantes lors de la mise en place du rotor autour du stator dans une transmission, notamment de véhicule automobile. Cette difficulté de montage peut engendrer une variation de l'entrefer et ainsi une dégradation du rendement.

Le but de la présente invention est de remédier à l'inconvénient susmentionné en proposant un moteur électrique du type décrit ci-dessus qui soit facilement montable et démontable dans une chaîne de traction d'un véhicule automobile, et qui soit également peu encombrant.

A cet effet, la présente invention concerne un moteur électrique selon la revendication 1.

Suivant quelques dispositions intéressantes de l'invention:
- la culasse est munie d'une cavité débouchante sur l'une de ces faces latérales plane qui coopère avec une face plane du carter de transmission en position de montage, la cavité étant destinée a être traversée par un fluide tel qu'un liquide de refroidissement qui coopère avec des conduits respectivement d'amenée et d'évacuation dudit liquide réalisés dans le carter de la transmission;
- l'accouplement de l'ensemble pré-assemblé sur l'arbre de la transmission est assuré par la coopération de cannelures réalisées respectivement sur l'arbre d'entrée de la transmission et dans l'alésage du manchon et en ce que la culasse est pourvue de moyen de fixation sur le carter.
- la cavité est munie d'une cloison longitudinale de telle sorte qu'en position de montage de la culasse les conduits respectivement d'amenée et d'évacuation du liquide sont disposés de part et d'autre de cette cloison afin d'établir une circulation du liquide de refroidissement de manière circonférentielle;
- la culasse est pourvue de deux chenaux présentant en coupe transversale une forme semi-circulaire et sensiblement concentrique l'un à l'autre formant ainsi un chenal extérieur et un chenal intérieur, et en ce que chacun des chenaux coopère respectivement avec un des conduits d'amenée ou d'évacuation du liquide de refroidissement;
- une plaque pourvue d'une pluralité d'orifices est interposée entre la face plane de la culasse et la face plane du carter de la transmission afin de permettre une circulation toroïdale du liquide de refroidissement dans la culasse;
- le chenal extérieur est alimenté par le conduit d'amenée du liquide de refroidissement.

Les caractéristiques de l'invention mentionnées ci-dessus, ainsi que d'autres, apparaîtront plus clairement à la lecture de la description suivante d'un exemple de réalisation, en se référant aux dessins annexés sur lesquels :
- la figure 1 est une vue schématique en coupe longitudinale d'un moteur électrique suivant l'invention accouplé à une transmission notamment d'un véhicule automobile,
- la figure 2 est une vue de face de la culasse du moteur électrique suivant l'invention selon un premier mode de réalisation, et
- la figure 3 est une vue de face similaire à la figure 2 selon un second mode de réalisation.

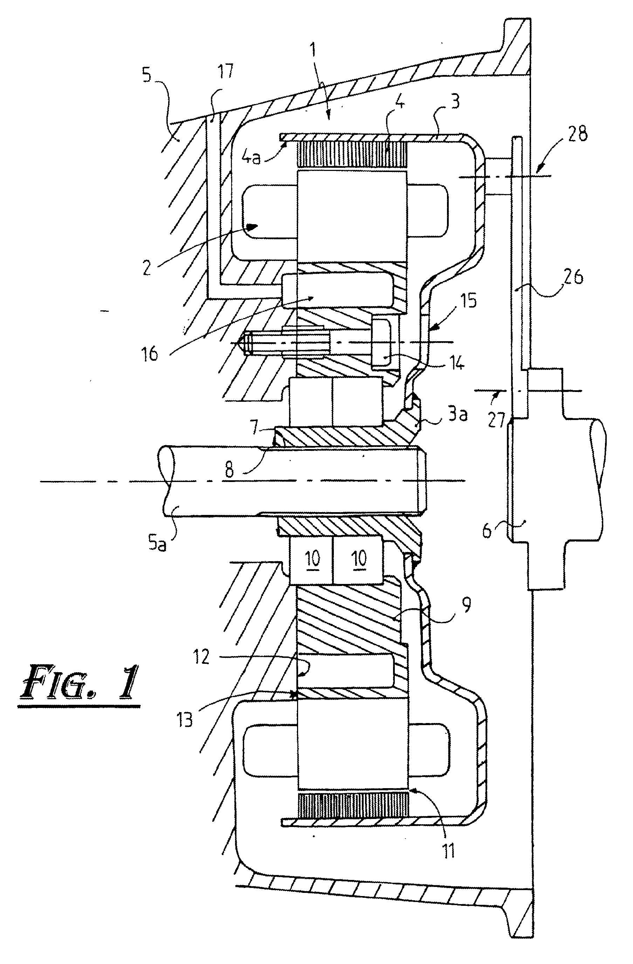

On a représenté à la figure 1, un moteur électrique 1 constitué de manière classique d'un stator bobiné 2 et d'un rotor 3 en forme de cloche portant des aimants permanents 4 répartis de façon régulière sur la face interne 4a de sa partie cylindrique.

Comme visible sur cette figure, ledit moteur électrique 1 est accouplé à un arbre d'entrée 5a d'une transmission 5 notamment d'un véhicule automobile par exemple une boîte de vitesses automatique et est disposé entre un moteur thermique représenté uniquement par l'extrémité d'un vilebrequin 6 et la transmission 5 de manière à transmettre une puissance auxiliaire à cette dernière.

L'accouplement entre le moteur électrique et la transmission 5 est réalisé par l'intermédiaire d'un manchon 3a solidaire de la cloche du rotor 3, par exemple par soudure, qui est pourvu de cannelures longitudinales 7 réalisé dans son alésage intérieur aptes à engrener avec des cannelures complémentaires 8 réalisées sur l'arbre d'entrée 5a de la transmission 5.

Selon la présente invention, le stator 2 du moteur électrique est monté fixement, notamment par emmanchement sur le pourtour d'une culasse 9 de forme sensiblement cylindrique comportant un alésage destiné à recevoir la bague extérieure de roulements de centrage 10 emmanchés sur le manchon 3a, comme visible plus clairement sur la figure 1.

On comprend aisément à la lecture de la description ci-dessus que le stator 2 ainsi assemblé sur la culasse 9 et le manchon 3a solidaire du rotor 3 constitue un ensemble pré-assemblé qui est avantageusement, de part le centrage du rotor et du stator au moyen des roulement 10, muni d'un entrefer 11 constant. Cet ensemble pré-assemblé peut ainsi être accouplé sur l'arbre de la transmission 5a.

On notera que le montage du rotor autour du stator est effectué préalablement en usine avec un outillage particulier afin d'assurer un centrage adéquat entre ces deux pièces.

Cet accouplement est réalisé par la coopération des cannelures 8 de l'arbre 5a et celles 7 du manchon 3a jusqu'à la mise en contact de la face plane latéral 12 du carter de la transmission 5 et de la face plane 13 perpendiculaire à l'axe du moteur de la culasse 9. Afin d'assurer une stabilité à l'ensemble, la culasse 9 est montée fixement par des moyens de fixation du type vis 14 sur le carter.

Avantageusement, un joint d'étanchéité ou une pâte d'étanchéité est interposé entre ces deux faces planes 12 et 13.

On notera que l'accès aux vis 14 est réalisé par l'intermédiaire de trous 15 réalisés parallèlement à l'axe du moteur dans la cloche du rotor 3 au droit des vis 14, comme visible plus clairement sur la figure 1.

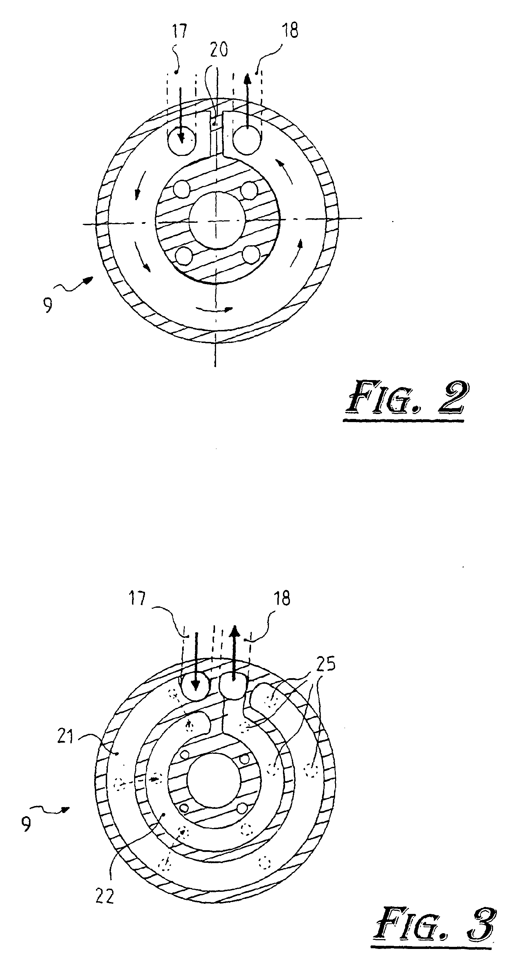

La culasse 9 est munie d'au moins une cavité 16 débouchante sur la face plane 12 destinée a être traversée par un fluide tel qu'un liquide de refroidissement qui coopère avec des conduits respectivement d'amenée 17 et d'évacuation 18 dudit liquide réalisés dans le carter de la transmission 5, visible plus clairement sur les figures 2 et 3. De manière classique ces conduits 17 et 18 sont reliés à une pompe et à un radiateur, non représentés, constituant ainsi le circuit de refroidissement.

On a représenté à la figure 2, un premier mode de réalisation d'un circuit de refroidissement, dans lequel la cavité 16 est munie d'une cloison longitudinale 20. Cette culasse 9 est plaquée contre la face plane 13 du carter de telle sorte que les conduits respectivement d'amenée 17 et d'évacuation 18 du liquide de refroidissement sont disposés de part et d'autre de cette cloison 20, afin d'établir une circulation du liquide de refroidissement de manière circonférentielle, comme représentée par les flèches sur cette figure.

Suivant un autre mode de réalisation, représenté à la figure 3, la culasse 9 est pourvue de deux chenaux 21 et 22 présentant en coupe transversale une forme semi-circulaire et sensiblement concentrique l'un à l'autre formant ainsi un chenal extérieur 21 et un chenal intérieur 22. Chacun des chenaux 21, 22 coopère respectivement avec un des conduits soit d'amenée 17 ou d'évacuation 18 du liquide de refroidissement. Selon un mode préférentiel de réalisation le chenal extérieur est alimenté par le conduit d'amenée 17.

Afin de permettre la circulation du liquide de refroidissement d'un chenal à l'autre, une plaque, non représentée, est interposée entre le carter de la transmission et la culasse 9 et est pourvue d'une pluralité d'orifices 25, représentée en silhouette sur la figure 3. Une telle architecture permet avantageusement une circulation toroïdale du liquide dans la culasse 9 et également une amenée en tous points du stator 2 du liquide à la même température, et par conséquent un refroidissement uniforme.

On a représenté sur la figure 1, a titre indicatif, des moyens d'entraînement du moteur thermique avec le moteur électrique. Ces moyens sont constitués d'un flasque 26 en tôle dont l'une de ces extrémités est monté fixement sur l'extrémité du vilebrequin au moyen de vis 27 et dont l'autre extrémité est solidaire de la cloche du rotor 3 au moyen notamment de plots taraudés 28 soudés sur ce dernier, comme visible plus clairement à la figure 1.

On comprend à la lecture de la description ci-dessus que le moteur électrique selon la présente invention s'avère particulièrement facile à monter ou à démonter du fait de la réalisation d'un pré-montage entre le rotor et le stator constituant ainsi une unité prêt à l'emploi. Une telle unité d'un moteur électrique trouve particulièrement une application dans les véhicules électriques ou hybrides et permet d'être peu encombrant.

Le moteur selon l'invention s'avère également très efficace au niveau du circuit de refroidissement par la coopération de conduits d'amenée et d'évacuation du liquide de refroidissement prévu sur le carter de la transmission.

Bien que l'invention ait été décrite en liaison avec un mode de réalisation particulier, elle comprend tous les équivalents techniques des moyens décrits.

## Revendications

1. Moteur électrique du type à aimants permanents destiné à être accouplé à une transmission (5), notamment d'un véhicule automobile, comprenant un stator bobiné (2) et un rotor (3) en forme de cloche portant des aimants permanents (4) répartis de façon régulière sur la face interne (4a) de sa partie cylindrique, le stator (2) du moteur électrique (1) est monté fixement, sur le pourtour d'une culasse (9) de forme sensiblement cylindrique comportant un alésage *recevant* la bague extérieure de roulements de centrage (10) emmanchés sur un manchon (3a) solidaire de la cloche du rotor (3) formant ainsi un ensemble pré-assemblé apte à être accouplé à un arbre d'entrée (5a) de la transmission (5), **caractérisé en ce que** la culasse (9) est munie d'au moins une cavité (16) débouchante sur l'une de ses faces latérales plane (13) *alignée avec une des faces latérales du stator* (2) et qui *est destinée* coopérer avec une face plane (12) du carter de transmission (5) en position de montage, la cavité (16) étant destinée a être traversée par un fluide tel qu'un liquide de refroidissement, *ladite cavité étant destiné* à *coopérer* avec des conduits respectivement d'amenée (17) et d'évacuation (18) dudit liquide réalisés dans le carter de la transmission (5).

2. Moteur selon la revendication 1, **caractérisé en ce que** l'accouplement de l'ensemble pré-assemblé sur l'arbre (5a) de la transmission (5) est assuré par la coopération de cannelures (7; 8) réalisées respectivement sur l'arbre d'entrée (5a) de la transmission et dans l'alésage du manchon (3a) et **en ce que** la culasse (9) est pourvue de moyen de fixation (14) sur le carter de la transmission.

3. Moteur selon l'une quelconque des revendications précédentes, **caractérisé en ce que** la cavité (16) est munie d'une cloison longitudinale (20) de telle sorte qu'en position de montage de la culasse (9) les conduits respectivement d'amenée (17) et d'évacuation (18) du liquide sont disposés de part et d'autre de cette cloison (20) afin d'établir une circulation du liquide de refroidissement de manière circonférentielle.

4. Moteur selon l'une quelconque des revendications 1 à 2, **caractérisé en ce que** la cavité de la culasse (9) est constituée de deux chenaux (21, 22) présentant en coupe transversale une forme semi-circulaire et sensiblement concentrique l'un à l'autre formant ainsi un chenal extérieur (21) et un chenal intérieur (22), et **en ce que** chacun des chenaux coopère respectivement avec un des conduits d'amenée (17) ou d'évacuation (18) du liquide de refroidissement.

5. Moteur selon la revendication 4, **caractérisé en ce qu'**une plaque pourvue d'une pluralité d'orifices (25) est interposée entre la face plane (13) de la culasse (9) et la face plane (12) du carter de la transmission (5) afin de permettre une circulation toroïdale du liquide de refroidissement dans la culasse (9).

6. Moteur selon la revendication 4, **caractérisée en ce que** le chenal extérieur (21) est alimenté par le conduit d'amenée (17) du liquide de refroidissement.

## Claims

1. Electric motor of the permanent magnet type intended to be coupled to a transmission (5), particularly that of a motor vehicle, comprising a wound stator (2) and a bell-shaped rotor (3) carrying permanent magnets (4) distributed uniformly on the internal face (4a) of its cylindrical part, the stator (2) of the electric motor (1) is mounted fixedly on the periphery of a yoke (9) of substantially cylindrical shape comprising a bore that accepts the outer ring of centring rolling bearings (10) pushed onto a sleeve (3a) secured to the bell of the rotor (3) thus forming a preassembled assembly that can be coupled to an input shaft (5a) of the transmission (5), **characterized in that** the yoke (9) is equipped with at least one cavity (16) which opens onto one of its flat lateral faces (13) in line with one of the lateral faces of the stator (2) and which is intended to collaborate with a flat face (12) of the housing of the transmission (5) in the mounted position, the cavity (16) being intended to have a fluid such as a cooling liquid passed through it, the said cavity being intended to collaborate with respective liquid inlet (17) and outlet (18) ducts for the said liquid, which ducts are made in the housing of the transmission (5).

2. Motor according to Claim 1, **characterized in that** the preassembled assembly is coupled to the shaft (5a) of the transmission (5) by the collaboration of splines (7; 8) made respectively on the input shaft (5a) of the transmission and in the bore of the sleeve (3a), and **in that** the yoke (9) is provided with a means (14) of attachment to the transmission housing.

3. Motor according to either one of the preceding claims, **characterized in that** the cavity (16) is fitted with a longitudinal partition (20) such that when the yoke (9) is in the mounted position, the respective liquid inlet (17) and outlet (18) ducts are positioned one on each side of this partition (20) so as to cause the cooling liquid to flow circumferentially.

4. Motor according to either one of Claims 1 and 2, **characterized in that** the cavity of the yoke (9) is made up of two channels (21, 22) which in cross section have a semicircular shape and which are substantially concentric with one another, thus forming an outer channel (21) and an inner channel (22), and **in that** each of the channels collaborates with a respective one of the cooling liquid inlet (17) or outlet (18) ducts.

5. Motor according to Claim 4, **characterized in that** a plate provided with a number of orifices (25) is inserted between the flat face (13) of the yoke (9) and the flat face (12) of the housing of the transmission (5) so as to allow the cooling liquid to flow toroidally in the yoke (9).

6. Motor according to Claim 4, **characterized in that** the outer channel (21) is fed from the cooling liquid inlet duct (17).

## Patentansprüche

1. Elektromotor mit Permanentmagneten zum Anflanschen an ein Getriebe (5), insbesondere eines Kraftfahrzeugs, umfassend einen gewickelten Stator (2) und einen glockenförmigen Rotor (3), der Permanentmagnete (4) trägt, die auf reguläre Weise auf der Innenfläche (4a) seines zylindrischen Teils verteilt sind, wobei der Stator (2) des Elektromotors (1) fest an dem Umfang eines Zylinderkopfs (9) angebracht ist, welcher im Wesentlichen eine zylindrische Form mit einer Bohrung aufweist, die den Außenring der Zentrierungsrollen (10) aufnimmt, welche von einem einstückig mit der Rotorglocke (3) ausgeführten Stutzen (3a) in Eingriff genommen werden, so dass eine vormontierte Baugruppe entsteht, die an einen Eingangsbaum (5a) des Getriebes (5) angeflanscht werden kann, **dadurch gekennzeichnet, dass** der Zylinderkopf (9) mit mindestens einem Hohlraum (16) versehen ist, welcher an einer seiner ebenen Seitenflächen (13), die auf eine der Seitenflächen des Stators (2) ausgerichtet ist, mündet und dazu ausgelegt ist, in der Montageposition mit einer ebenen Fläche (12) des Gehäuses des Getriebes (5) zusammenzuwirken, wobei der Hohlraum (16) dazu ausgelegt ist, von einem Fluid, wie einer Kühlflüssigkeit, durchlaufen zu werden, und wobei der Hohlraum dazu ausgelegt ist, jeweils mit in dem Gehäuse des Getriebes (5) ausgebildeten Zufuhrleitungen (17) und Ablassleitungen (18) der Flüssigkeit zusammenzuwirken.

2. Motor nach Anspruch 1, **dadurch gekennzeichnet, dass** das Anflanschen der vormontierten Baugruppe an dem Baum (5a) des Getriebes (5) durch das Zusammenwirken von jeweils an dem Eingangsbaum (5a) des Getriebes und der Bohrung des Stutzens (3a) ausgeführten Rillen (7; 8) sichergestellt wird, und **dadurch**, dass der Zylinderkopf (9) mit Befestigungsmitteln (14) an dem Gehäuse des Getriebes versehen ist.

3. Motor nach einem der vorhergehenden Ansprüche, **dadurch gekennzeichnet, dass** der Hohlraum (16) mit einer Längstrennwand (20) versehen ist, so dass die Zufuhrleitungen (17) und Ablassleitungen (18) der Flüssigkeit in der Montageposition des Zylinderkopfs (9) jeweils beidseits dieser Längstrennwand (20) angeordnet sind, um eine kreislinienförmige Zirkulation der Kühlflüssigkeit herzustellen.

4. Motor nach einem der Ansprüche 1 bis 2, **dadurch gekennzeichnet, dass** der Hohlraum des Zylinderkopfs (9) aus zwei Kanälen (21, 22) besteht, die einen halbkreisförmigen Querschnitt aufweisen und im Wesentlichen zueinander konzentrisch sind, so dass sie einen Außenkanal (21) und einen Innenkanal (22) bilden, und **dadurch**, dass jeder der Kanäle jeweils mit einer der Zufuhrleitung (17) oder der Ablassleitung (18) der Kühlflüssigkeit zusammenwirkt.

5. Motor nach Anspruch 4, **dadurch gekennzeichnet, dass** eine mit einer Vielzahl von Öffnungen (25) versehene Platte zwischen der ebenen Fläche (13) des Zylinderkopfs (9) und der ebenen Fläche (12) des Gehäuses des Getriebes (5) angeordnet ist, um eine ringförmige Zirkulation der Kühlflüssigkeit in dem Zylinderkopf (9) zu ermöglichen.

6. Motor nach Anspruch 4, **dadurch gekennzeichnet, dass** der Außenkanal (21) durch die Zufuhrleitung (17) der Kühlflüssigkeit versorgt wird.
